# EUROPÄISCHE PATENTSCHRIFT

(11) **EP 1 525 755 B1**
(45) Veröffentlichungstag und Bekanntmachung des Hinweises auf die Patenterteilung: **17.01.2007**
(21) Anmeldenummer: 03740084.3
(22) Anmeldetag: 11.06.2003
(51) Int. Cl.: H04Q 3/00, H04Q 11/04

(54) **Verfahren, periphere Einheit und paketorientierte Vermittlungsstelle zum Austausch von Signalisierungsinformationen zwischen einem ISDN-Anschluss und dem zentralen Teil einer paketorientierten Vermittlungsstelle**
Method, peripheral unit and packet-based switch for exchanging signalling information between an ISDN access device and the central part of a packet-based switch
Procédé, unité périphérique et commutateur de paquets pour échanger des informations de signalisation entre un accès RNIS et la partie centrale d'un commutateur de paquets

(30) Priorität: 31.07.2002 DE 10234937
(43) Veröffentlichungstag der Anmeldung: 27.04.2005
(73) Patentinhaber: SIEMENS AKTIENGESELLSCHAFT, 80333 München (DE)
(72) Erfinder: LÖBIG, Norbert, 64291 Darmstadt (DE)
(86) Internationale Anmeldenummer: PCT/DE2003/001945
(87) Internationale Veröffentlichungsnummer: WO 2004/017644

(56) Entgegenhaltungen:
- EP-A- 1 202 530
- WO-A-01/78416
- WO-A-02/51195

## Beschreibung

Die Erfindung betrifft ein Verfahren, eine periphere Einheit und eine paketorientierte Vermittlungsstelle zum Austausch von Signalisierungsinformationen zwischen einem ISDN-Anschluss und dem zentralen Teil einer paketorientierten Vermittlungsstelle.

Die Konvergenz bzw. der Zusammenschluss von zeitmultiplexbasierten Netzen - auch TDM (time devision multiplexing) Netze genannt - und paketbasierten Netzen führt zu neuen vermittlungstechnischen Anforderungen hinsichtlich der Umsetzung von Signalisierungs- und Nutzdaten.

Im Zuge der Abstimmung von zeitmultiplexbasierten und paketbasierten Netzen aufeinander - hier wird häufig auch der aus dem Englischen übernommene Ausdruck Interworking benutzt - sind sowohl teilnehmernahe als auch vermittlungsknotenseitige Anpassungen erforderlich.

Eine TDM-basierte Vermittlungsstelle bzw. ein TDM-basierter Vermittlungsknoten veranlasst die Verbindungssteuerung und die Terminierung bzw. Durchschaltung der Nutzkanäle. Das Aufgabenspektrum einer Vermittlungsstelle für Datenübertragung im Paketnetz - im folgenden paketbezogene Vermittlungsstelle genannt - beinhaltet dagegen zuzüglich zu der herkömmlichen Verbindungssteuerung die Steuerung der zugehörigen, i.a. außerhalb der paketbasierten Vermittlungsstelle geführten Nutzkanäle über externe Einrichtungen (z.B. Gateways, Ressourcen-Server, ...), welche geeignete Schnittstellen für Nutzdatenströme (z.B. mit Hilfe des RTP (Real Time Protocols)) und Steuerung (z.B. mit Hilfe eines der folgenden Protokolle: MGCP (Media Gateway Control Protocol), H.248, H.323) bereitstellen.

Für die Endgeräteseite gibt es neben den klassischen analogen und ISDN-Endgeräten und Nebenstellen auch für das Paketnetz geeignete Terminals, die breitbandigen Datenzugriff erlauben, zusätzlich aber zur Unterstützung der von öffentlichen Fernsprechnetzen bekannten Basisleistungsmerkmale in der Lage sind (z.B. mit Hilfe des H.323 Protokolls oder des SIP (Session Initiation Protocol) Protokolls). Als breitbandiges Zugangsmedium bzw. Zugangsnetz zum Teilnehmer findet man häufig entweder mit geeigneten xDSL-Techniken (DSL: Digital Subscriber Line) betriebene Teilnehmeranschlussleitungen oder Kabelnetze.

Die Schnittstelle zwischen Zugangsnetz und Übertragungsnetz, z.B. paketbasiertem IP (Internet Protocol) Netz, wird in der Regel durch teilnehmernahe Adaptionseinrichtungen gebildet. Für teilnehmernahe Adaptionseinrichtungen wird häufig auch der Ausdruck "peripherer Adapter" gebraucht. Beispiele für teilnehmernahe Adaptionseinrichtungen sind IAD (Integrated Access Device) zur Terminierung einer xDSL-Strecke und MTA (Multimedia Terminal Adapter) am oder im Cable Modem, die übertragungsnetzseitig das Zugangsnetz abschließen. über teilnehmernahe Adaptionseinrichtungen und Zugangsnetze ist dann der Anschluss breitbandiger Endeinrichtungen (z.B. PC mit Internetzugriff, Fernsehgerät, Videotelephon) wie auch klassischer Teilnehmerendgeräte, z.B. analoges Telephon, ISDN-Telephon, sowie analoger und ISDN-Nebenstelle möglich.

Paketorientierte Vermittlungsstellen sollten für klassische Endgeräte, d.h. Telephone und Nebenstellenanlagen, nach Möglichkeit alle von der leitungsgebundenen Anschlusstechnik bekannten Leistungsmerkmale zur Verfügung stellen, damit die Einbindung paketorientierter Netze nicht zur Einschränkung des Merkmalspektrums von Diensten führt. Daneben muss die Nichtverfügbarkeit von Hardware- und Software-Ressourcen sowie die Nichterreichbarkeit von Endgeräten detektiert und gegebenenfalls eine Alarmierung des Bedieners vorgenommen werden. Strukturen der zwischengelagerten Zugangsnetze sind dem paketorientierten Vermittlungsknoten jedoch in der Regel unbekannt. Z.B. werden Ausfallsituationen von Komponenten und Netzanteilen, die den Signalisierungsweg zwischen paketorientiertem Vermittlungsknoten und Teilnehmerendeinrichtung betreffen, dem Vermittlungsknoten nur indirekt, d.h. über Erkennung der Nichterreichbarkeit von Teilnehmern und Nebenstellen offenbar.

Über ein Paketnetz erreichbare klassische analoge und ISDN-Teilnehmer sind zur Unterscheidung von rein paketbasierten Teilnehmern (SIP, H.323) und klassischen, leitungsgebunden angeschlossenen analogen und ISDN-Teilnehmern (z.B. Anschlüsse über die Schnittstellen V5.1 und V5.2) im paketbasierten Vermittlungsknoten administrativ in besonderer Weise gekennzeichnet. Die peripheren, teilnehmernahen Adaptionseinrichtungen besitzen spezielle Funktionen (z.B. Telephonie Client in IADs und MTAs), die die Übertragung der Signalisierung zwischen Endgerät und paketbasierter Vermittlungsstelle über zwischengelagerte Zugangsnetze und paketbasierte übertragungsnetze bzw. Weitverkehrsnetze ermöglichen. Die paketbasierten Vermittlungssysteme und Clients in den peripheren Adaptionseinrichtungen (IAD, MTA) können dazu durch die Netzwerkverwaltung entsprechend konfiguriert werden. Bei der Bereitstellung von Funktionen in den teilnehmernahen Adaptionseinrichtungen für die Übertragung der Signalisierung werden aus Sicht des Vermittlungssystems analoge und ISDN Schnittstellen unterschieden. Weiteres Unterscheidungsmerkmal aus Sicht des paketbasierten Vermittlungssystems ist die Zuordnung von Leistungsmerkmalen eines Hauptanschlusses oder eines Nebenstellenanschlusses. Aus Sicht des Teilnehmers wird dann entweder ein als Hauptanschluss betriebenes analoges oder ISDN-Endgerät an den peripheren Adapter (IAD, MTA) angeschlossen, oder es wird eine analoge oder ISDN-Nebenstellenanlage (auch PBX oder Private Branch Exchange genannt) in gleicher Weise angeschlossen.

Hinsichtlich ISDN-Schnittstellen, z.B. an der peripheren Adaptionseinrichtung, unterscheidet man zwei verschiedene Anschlüsse bzw. Schnittstellen:
- Bei dem Basisanschluss, auch mit BRA (Basic Rate Access) bezeichnet, sind ein oder zwei Nutzkanäle vorhanden. Häufig hat man zwei Nutzkanäle (B-Kanal) zu je 64 kbit/s (56 kbit/s in den USA) und einen Signalisierungskanal (D-Kanal) zu 16 kbit/s.
- Die zweite Anschlussart, auch mit PRA (Primary Rate Access) bezeichnet, ist der Primärmultiplexanschluss, in der Regel bestehend aus 30 B-Kanälen (wegen des PCM30-Systems), einem Synchronisationskanal und einem Signalisierungskanal (D-Kanal).Gemäß Standardisierung sind ebenfalls bis zu 4 PCM30-Systeme mit einem einzigen D-Kanal zu einem PRA zusammenfassbar.

Der Zustand (Layer 1, Layer 2, Blockierungszustand) des ISDN-Anschlusses (BRA, PRA) ist einer klassischen Ortsvermittlungsstelle eines TDM Netzes im Gegensatz zum Falle einer paketbasierten Vermittlungsstelle auf Grund physikalischer Leitungsterminierung oder der Schnittstellenprotokolle zu Teilnehmerkonzentratoren und Access Networks bekannt.

Auch für Paketnetze müssen über periphere Adapter kleine ISDN-Nebenstellen über einen BRA oder eine Mehrzahl von BRAs anschließbar sein; große ISDN-Nebenstellen müssen über einen oder eine Mehrzahl von PRAs anbindbar sein, wobei auch Mischungen von BRAs und PRAs im Hinblick auf eine gegebene ISDN-Nebenstelle unterstützbar sein müssen. Hierbei werden BRA und PRA eventuell über einen einheitlichen oder über spezifische periphere Adapter angeschlossen und physikalisch terminiert. Die ISDN-Signalisierung kann dann paketbasiert zwischen peripherem Adapter und paketorientierter Vermittlungsstelle (z. B. mittels ISDN User Adaptation IUA und SCTP) ausgetauscht werden. Dieses geschieht üblicherweise mittels des DSS1 (Digital Signalling System No.1) Protokolls, zu dem Details in dem Standard ITU-T Q.931 (ISDN user-network interface layer 3 specification for basic call control) dargelegt sind.

Ein solches Verfahren zum Austausch von Signalisierungsinformationen ist schon aus WO 02/51195 A1 bekannt.

Die Erfindung hat zur Aufgabe, eine flexible und effiziente Behandlung von verschiedenen ISDN-Anschlußtypen durch eine paketorientierte Vermittlungsstelle zu gewährleisten.

Die Aufgabe wird durch ein Verfahren nach Anspruch 1, eine periphere Einrichtung nach Anspruch 11 und eine paketorientierte Vermittlungsstelle nach Anspruch 18 gelöst.

Im allgemeinen umfasst eine Vermittlungsstelle periphere Einheiten, z.B. Anschlusseinheiten für Teilnehmer oder Leitungen, sowie zentrale Einheiten bzw. einen zentralen Teil oder Core, der z.B. eine zentrale Rechnerplattform, eine Nachrichtenverteilung, ein Koppelfeld, Protokollabschlusseinrichtungen, Hintergrundspeicher etc. beinhaltet. Im Hinblick auf eine paketbasierte Vermittlungsstelle ist hierbei die Existenz eines Koppelnetzes optional. Erfindungsgemäß wird in einer peripheren Einheit eine Anpassung vorgenommen, durch die unterschiedlichen ISDN-Anschlüsse in dem zentralen Teil der paketorientierten Vermittlungsstelle auf dieselbe einheitliche Weise repräsentiert und bedient werden können. Eine periphere Einheit, in der die erfindungsgemäße Anpassung vorgenommen werden kann, ist die Paketkontrolleinheit einer paketorientierten Vermittlungsstelle, die die Nutzdatenübertragung über das Paketnetz steuert.

Im Rahmen des erfindungsgemäßen Verfahrens werden zwischen einem ISDN-Anschluss, beispielsweise einem ISDN-BRA oder ISDN-PRA Anschluss, und dem zentralen Teil einer paketorientierten Vermittlungsstelle Signalisierungsinformationen über eine periphere Einheit der paketorientierten Vermittlungsstelle ausgetauscht. An dem ISDN-Anschluss kann z.B. ein ISDN-Endgerät oder eine ISDN-Nebenstellenanlage angeschlossen sein. Die Behandlung bzw. Bearbeitung der von dem ISDN-Anschluss übertragenen Signalisierungsinformationen in dem zentralen Teil der paketbasierten Vermittlungsstelle erfolgt unabhängig vom Typ des ISDN-Anschlusses. Z.B. wird in der paketbasierten Vermittlungsstelle nicht zwischen ISDN-BRA und ISDN-PRA Anschlüssen unterschieden. Zum Zwecke der vom ISDN-Anschlusstyp unabhängigen Behandlung von Signalisierungsinformationen durch den zentralen Teil der paketorientierten Vermittlungsstelle werden von dem ISDN-Anschluss zu der Vermittlungsstelle übertragene Signalisierungsinformationen in geeigneten peripheren Einheiten der Vermittlungsstelle angepasst. Entsprechend werden von dem zentralen Teil der paketorientierten Vermittlungsstelle in Richtung ISDN-Anschluß übertragene Signalisierungsinformationen in geeigneten peripheren Einheiten der Vermittlungsstelle nach Maßgabe des ISDN-Anschlusstyps angepasst. Auf diese Weise können in dem zentralen Teil der paketorientierten Vermittlungsstelle verschiedene ISDN-Anschlüsse durch einen einzigen Anschlusstyp repräsentiert werden. Im allgemeinen umfassen verschiedene ISDN-Anschlusstypen eine unterschiedliche Anzahl von Nutzdatenkanälen. So hat der PRA-Anschluss i. a. 30 Nutzdatenkanäle und einen Signalisierungskanal. Der BRA-Anschluss oder Basisanschluss umfasst dagegen ein oder zwei Nutzdatenkanäle und einen Signalisierungskanal. Bei der erfindungsgemäßen Anpassung von Signalisierungsinformationen in der peripheren Einheit kann für unterschiedliche Anschlusstypen auf eine Abbildung der unterschiedlichen Nutzdatenkanäle aufeinander vorgenommen werden. Dabei können Nutzdatenkanäle bzw. logische Ports im Paketnetz durch die Adressierung der Pakete bzw. die Adressen der Pakete unterschieden werden. Bei Nutzdatenübertragung im TDM- und im Paketnetz wird auch häufig statt des Begriffs Nutzdatenkanal der aus dem Englischen entlehnte Begriff Bearer verwendet. Erfindungsgemäß besteht dann eine Zuordnung zwischen logischem Port bzw. Nutzdatenkanal (Bearer) und der Bereitstellung von Ressourcen in paketorientierten Vermittlungssystemen. Zum Beispiel kann die Abarbeitung eines vermittlungstechnischen Programms in dem paketorientierten Vermittlungssystem nach Maßgabe des logischen Ports bzw. des Nutzdatenkanals vorgenommen werden. Auf der Seite des ISDN-Anschlusses sind physikalische Ports gegeben sowie Nutzdatenkanäle, die bei der Übertragung über ein TDM-Netz festen Zeitschlitzen zugeordnet sind. Die den ISDN-Anschluss betreffenden und an die paketorientierte Vermittlungsstelle gesendeten Signalisierungsinformationen werden häufig in einem peripheren Adapter (z.B. IAD oder MTA) für die Übertragung zu der paketorientierten Vermittlungsstelle über ein Paketnetz angepasst. Die bei der peripheren Einheit einlaufenden Signalisierungsinformationen werden beispielsweise mit Hilfe einer Tabelle für die ISDN-Anschlusstyp unabhängige Bearbeitung durch den zentralen Teil der paketorientierten Vermittlungsstelle angepasst. Eine solche Tabelle kann durch die Netzwerkverwaltung in der peripheren Einheit eingerichtet werden. Dies bedingt, dass die Netzwerkverwaltung die Hardwareschnittstellen bzw. die physikalischen Ports des ISDN-Anschlusses kennt, um die Tabelle einrichten zu können. Im Gegensatz zur Netzwerkverwaltung sind die Details bezüglich des ISDN-Anschlusses für den zentralen Teil der paketorientierte Vermittlungsstelle transparent. Die Bereitstellung der Mittel zum Anpassen von von einem ISDN-Anschluss an den zentralen Teil der paketorientierten Vermittlungsstelle übertragenen Signalisierungsinformationen im Sinne einer ISDN-Anschlusstyp unabhängigen Bearbeitung und Behandlung der Signalisierungsinformationen durch den zentralen Teil der paketbasierte Vermittlungsstelle in einer peripheren Einheit ist flexibel hinsichtlich Änderungen und Konfigurierungen. Eine aufwändige Implementierung von Mitteln zur Unterscheidung von verschiedenen ISDN-Anschlusstypen im zentralen Teil der paketorientierten Vermittlungsstelle wird vermieden, d.h. der Implementierungsaufwand reduziert. Dadurch erleichtert sich auch die Erweiterung von herkömmlichen Vermittlungsstellen um Steuerfunktionen für über ein Paketnetz geleitete Sprachverbindungen. Die erfindungsgemäße Anpassung in der peripheren Einheit erlaubt zudem eine Konzentration von Nutzdatenkanälen. Z.B. können die 30 Nutzdatenkanäle einer Nebenstellenanlage mit PRA-Anschluss auf weniger als 15 BRA-Anschlüsse in der paketorientierten Vermittlungsstelle abgebildet werden. Hierbei wird davon ausgegangen, dass der voranstehend genannte logische Porttyp der paketbasierten Vermittlungsstelle zusammenfällt mit dem ISDN BRA mit bis zu 2 Bearer Channels. Dies ist eine ökonomische Lösung bei schwacher Auslastung der Nutzdatenkanäle des ISDN-Anschlusses. Durch Konfiguration der peripheren Einheit kann bei Bedarf die Konzentration der Nutzdatenkanäle an eine geänderte Auslastung der Nutzdatenkanäle des ISDN-Anschlusses flexibel angepasst werden. Die Berücksichtigung von PRA mit mehr als 30 Nutzkanälen ist hierbei ebenfalls möglich.

Bei Unterschieden zwischen den logischen ISDN-Anschlüssen in der paketorientierten Vermittlungsstelle und den teilnehmerseitigen physikalischen ISDN-Anschlüssen muss häufig neben einer Abbildung der Nutzdatenkanalbezüge, z.B. Kanalnummern, auch eine Anpassung der Rufkennung vorgenommen werden. Dabei ist mit Rufkennung die in der ITU-T Q.931, ISDN user-network interface layer 3 specification for basic call control, als Call Reference bezeichneten Identifizierungsinformation gemeint. Diese Rufkennung unterscheidet Rufe bzw. Calls. Im Gegensatz zur Rufnummer eines Teilnehmers kann für eine Verbindung die Rufkennung auf disjunkten Teilstrecken unterschiedliche Werte annehmen. Rufkennungen werden Verbindungen zugeordnet. Nach Ende einer Verbindung ist die zugehörige Rufkennung wieder frei und kann neu vergeben werden. Schließlich ist eine Rufkennung nur innerhalb eines Signalisierungskanals eindeutig. Letztere Eigenschaft bedingt, dass in vielen Fällen eine Umsetzung der Rufkennung vorgenommen werden muss. Beispielsweise wird vermittlungsstellenseitig mit logischen BRA-ISDN-Anschlüssen gearbeitet, die jeweils zwei Basiskanäle und einen Signalisierungskanal umfassen. Mehrere von diesen logischen BRA-ISDN-Anschlüssen werden dann auf einen PRA-ISDN-Anschluss mit dreißig Nutzdatenkanälen und einen Signalisierungskanal abgebildet. Mithin erfolgt die Abbildung von mehreren Signalisierungskanälen auf einen Signalisierungskanal, dass heißt ohne eine Anpassung der Rufkennungen wäre die Eindeutigkeit der Rufkennungen in Frage gestellt.

Von dem ISDN-Anschluss an die paketorientierte Vermittlungsstelle gesendete Signalisierungsinformationen können über eine periphere Anpassungsfunktion in der Paketkontrolleinheit der paketbasierten Vermittlungsstelle übertragen werden, die für Anpassungen für eine Übertragung der Signalisierungsinformationen über ein Paketnetz verantwortlich zeichnet. Bei der Signalisierung zwischen ISDN-Anschluss und peripherer Anpassungsfunktion der Paketkontrolleinheit kommt z.B. das D-Kanal-Protokoll DSS1 (Digital Subscriber Signaling System no.
1) zur Anwendung. Die Paketkontrolleinheit ist hierbei eine spezielle periphere Einheit der paketbasierten Vermittlungsstelle.

Im folgenden wird die Erfindung im Rahmen eines Ausführungsbeispieles anhand von Figuren näher erläutert. Es zeigen:
- Fig. 1:: eine Anordnung von Netzwerkelementen mit erfindungsgemäßer Behandlung von ISDN-Anschlüssen in einer paketbasierten Vermittlungsstelle,
- Fig. 2:: eine schematische Darstellung einer paketorientierten Vermittlungsstelle und von über ein Paketnetz an die paketorientierte Vermittlungsstelle herangeführten Signalisierungsinformationen,
- Fig. 3:: eine schematische Darstellung einer paketorientierten Vermittlungsstelle und von über ein Paketnetz an die paketorientierte Vermittlungsstelle herangeführten Signalisierungsinformationen und Nutzdaten,
- Fig. 4:: eine schematische Darstellung von Protokollen bzw. Protokollstapeln beim Austausch von Signalisierungsinformationen zwischen einem Endgerät, einer Netzzugangseinrichtung und einer paketorientierten Vermittlungsstelle,
- Fig. 5:: erfindungsgemäße Umordnung der Nutzkanäle im Zuge einer ISDN-Anschluss unabhängigen Repräsentation in der paketorientierten Vermittlungsstelle,
- Fig. 6:: eine der Figur 5 entsprechende Umordnung der Nutzkanalsteuerung,
- Fig. 7:: erfindungsgemäße Anpassung der Rufkennungen.

In den Figuren bezeichnen gleiche Bezugszeichen gleiche Elemente.

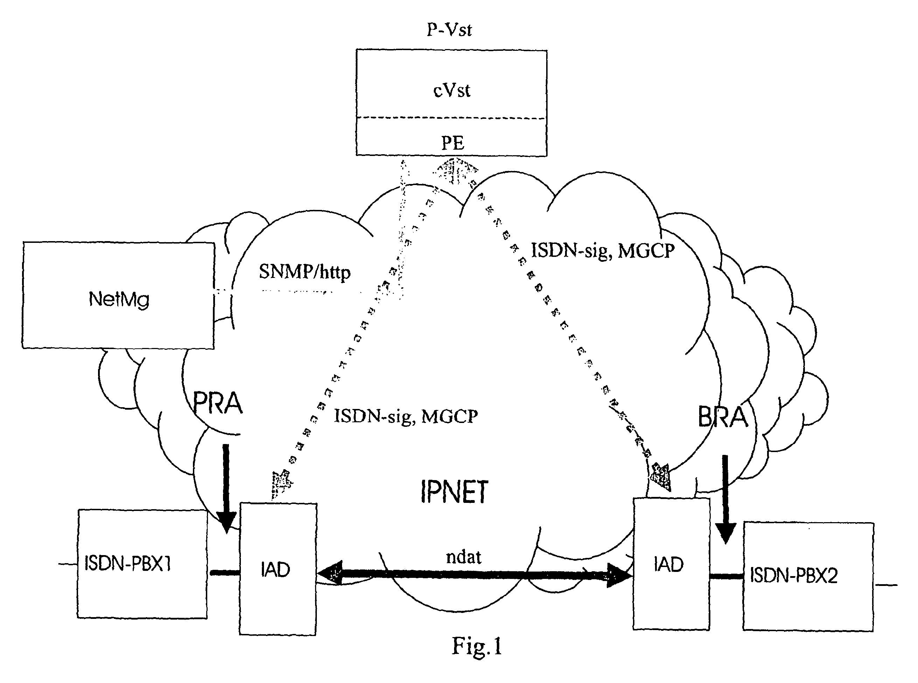

In Figur 1 sind zwei ISDN-Nebenstellen ISDN-PBX1 und ISDN-PBX2 über zwei periphere Adapter bzw. teilnehmernahe Einrichtungen IAD an ein Paketnetz IPNET angeschlossen. Bei den peripheren Adaptern IAD handelt es sich beispielsweise um IADs oder MTAs. Zwischen den beiden peripheren Adaptern IAD können Nutzdaten ndat, beispielsweise im Zuge eines über das paketbasierte Netz IPNET geleiteten Telefonats, ausgetauscht werden. Auf diese Weise können zwei Teilnehmer, die an die Nebenstellen ISDN-PBX1 bzw. ISDN-PBX2 angeschlossen sind, miteinander kommunizieren. Die Nebenstelle ISDN-PBX1 ist mit einem PRA-Anschluss mit dreißig Nutzdatenkanälen und einem Signalisierungskanal an einen der peripheren Adapter IAD angeschlossen. Die zweite Nebenstelle ISDN-PBX2 ist dagegen mit einem BRA-Anschluss mit zwei Nutzdatenkanälen und einem Signalisierungskanal an den anderen der peripheren Adapter IAD angeschlossen. Die Steuerung der Übertragung von Nutzdaten ndat über das Paketnetz IPNET erfolgt durch eine paketorientierte Vermittlungsstelle P-Vst. Zum Zwecke der Nutzdatenübertragungssteuerung tauscht die paketorientierte Vermittlungsstelle P-Vst mit den peripheren Adaptern IAD Signalisierungsinformationen ISDN-sig aus. Die Steuerung der Nutzdatenübertragung erfolgt beispielsweise mit Hilfe des MGCP (Media Gateway Cotroll Protocol)-Protokolls oder des H.248-Protokolls. Im allgemeinen besteht eine Vermittlungsstelle aus peripheren Einheiten PE, z.B. Anschlusseinheiten für Teilnehmer oder Leitungen, sowie zentralen Einheiten, wie z.B. eine zentrale Rechnerplattform, eine Nachrichtenverteilung, ein Koppelfeld, Protokollabschlusseinrichtungen, Hintergrundspeicher etc.. Als zentraler Teil einer paketorientierten Vermittlungsstelle cVst (cVst: für Core-Vermittlungsstelle) wird der die zentralen Einheiten umfassende Teil der Vermittlungsstelle mit der Gesamtheit aller peripheren Einheiten zur Steuerung von Verbindungen (CC-PE) bezeichnet. Darüber hinaus gibt es weitere periphere Einheiten wie zum Beispiel die Paketkontrolleinheiten (PCU) zur Anpassung an die paketbasierten Netzschnittstellen. Das Koppelnetz (SN) ist nicht notwendiger Bestandteil einer paketbasierten Vermittlungsstelle. Wichtige zentrale Einheiten sind in der Regel gedoppelt. Erfindungsgemäß wird in den peripheren Einheiten PE eine Anpassung vorgenommen, durch die beide unterschiedlichen ISDN-Anschlüsse PRA und BRA in dem zentralen Teil cVst (cVst: für Core-Vermittlungsstelle) der paketorientierten Vermittlungsstelle P-Vst auf dieselbe einheitliche Weise repräsentiert und bedient werden können, nämlich als BRA-Anschlüsse. Das Netzwerkmanagement NetMg administriert bzw. konfiguriert die in den peripheren Einrichtungen PE vorgehaltenen Mittel zur Anpassung z.B. mit Hilfe des SNMP (Simple Network Management Protocol) Protokolls, über Datentransfer auf FTP (File Transfer Protocol) bzw. TFTM (Trivial File Transfer Protocol) Basis oder über das Web mittels dem http (hypertext transfer protocol) Protokoll. Durch das Netzwerkmanagement NetMg werden die logische Repräsentation der ISDN-Nutzdatenkanäle bzw. die logischen Ports der ISDN-Nutzdatenkanäle in der paketorientierten Vermittlungsstelle P-Vst eingerichtet bzw. verwaltet. Der Transport von ISDN-Signalisierungsnachrichten zwischen den peripheren Adaptern IAD und der paketorientierten Vermittlungsstelle P-Vst kann mit Hilfe des SCTP (Stream Control Transmission Protocol)-Protokolls und ISDN-spezifischer Adaptionsschicht (z. B. IUA) vorgenommen werden. Mit Hilfe des SCTP-Protokolls können in IP (Internet Protocol)-Netzen SS7 Signalisierungsnachrichten auch effizient übertragen werden. Für die Signalisierung zwischen den ISDN-Nebenstellen ISDN-PBX1 und ISDN-PBX2 und dem jeweils zugehörigen peripheren Adapter IAD wird beispielsweise das DSS1 (Digital Signaling System No. 1)-Protokoll verwendet.

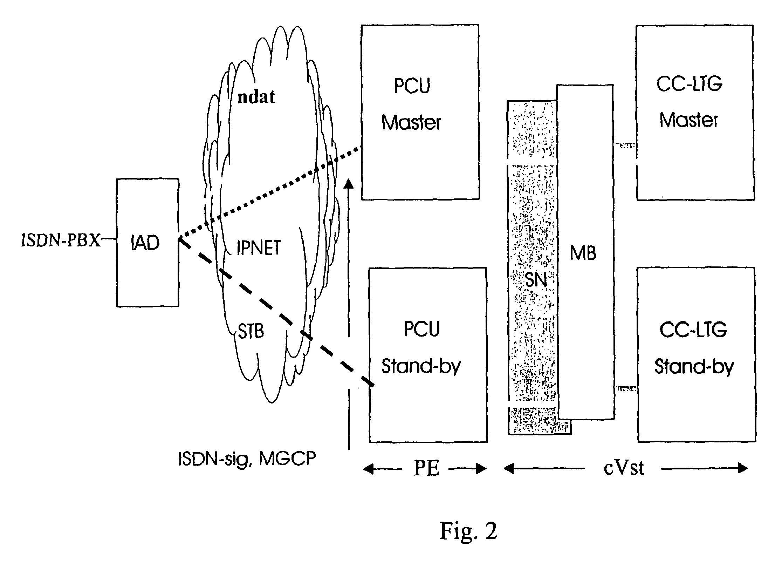

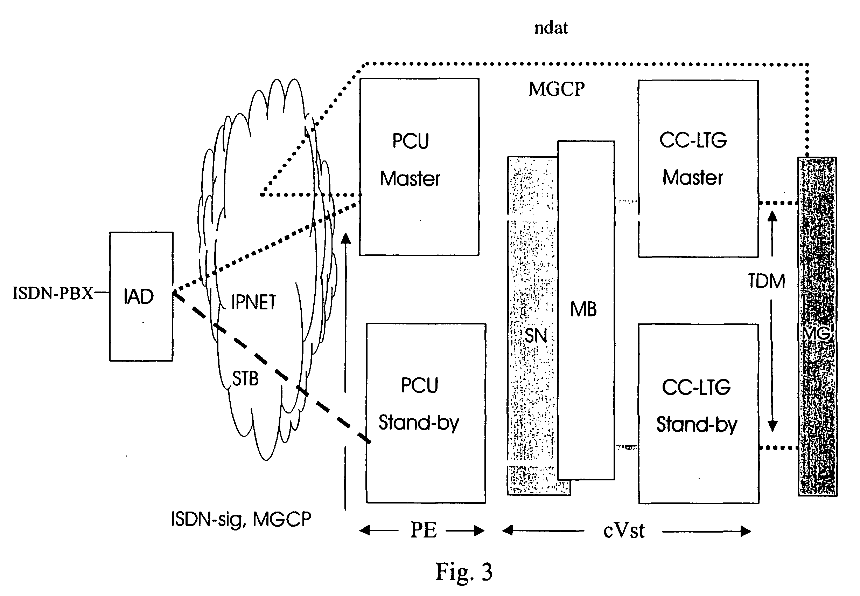

In Fig.2 und Fig.3 sind Details einer paketorientierten Vermittlungsstelle P-Vst gezeigt, die in dem in Fig. 1 dargestellten Rahmen zum Einsatz kommen kann. Die Steuerfunktionen für Sprachverbindungen werden durch eine Leitungsverbindungsgruppe CC-LTG (CC-LTG: steht für call control line trunk group) wahrgenommen, die zwecks Ausfallssicherheit gedoppelt ist (Ersatzgruppe ist mit "Stand-by" gekennzeichnet). Der zentrale Teil cVst umfasst zudem einen Nachrichtenverteiler MB (MB: steht für message buffer) und optional ein Koppelfeld SN. Die peripheren Einheiten PE umfassen eine Paketkontrolleinheit PCU (PCU: steht für packet control unit), die ebenfalls gedoppelt ist (Stand-by). Die Paketkontrolleinheit erfüllt Steuerfunktionen für die Übertragung von Nutzdaten ndat von einer Netzzugangseinrichtungen bzw. einem Gateway aus über das Paketnetz IPNET. Die Steuerung wird mit z.B. Hilfe des MGCP Protokolls vorgenommen. Die Paketkontrolleinheit PCU bedient in der Regel mehrere sogenannte Media Gateway Schnittstellen, für die das Steuerprotokoll (z.B. MGCP) terminiert wird und Steuerinformationen für die Bearbeitung durch den zentralen Teil cVst der paketorientierten Vermittlungsstelle P-Vst angepasst werden. Die mit dem peripheren Adapter IAD ausgetauschten Signalisierungsinformationen ISDN-sig sowie die Nachrichten zu Steuerung der Nutzdatenübertragung werden zu der Paketkontrolleinheit PCU übertragen, bevor eine weitere Bearbeitung durch die paketorientierte Vermittlungsstelle P-Vst stattfindet. Bei Ausfall der Master-Paketkontrolleinheit PCU werden die mit der Netzzugangseinrichtung IAD ausgetauschten Nachrichten bzw. Informationen über die Ersatzpaketkontrolleinheit PCU Stand-by geleitet (in den Figuren Fig. 2 und Fig. 3 ist der entsprechende Datenstrom durch das Bezugszeichen STB (STB für: Stand-by) gekennzeichnet). Fig.2 und Fig.3 zeigen zwei unterschiedliche Szenarien hinsichtlich der Nutzdatenführung. Im Gegensatz zu TDM Netzen werden in Fig.2 die Nutzdaten ndat nicht über die Vermittlungsstelle geleitet, sonder direkt über das Paketnetz IPNET übertragen. Dagegen sieht das Szenario von Fig. 3 vor, dass die Nutzdaten ndat über die paketorientierte Vermittlungsstelle P-Vst geführt werden. Nutzdaten ndat werden von der Netzzugangseinrichtung IAD zu einem Mediagateway MG übertragen, dort für die Übertragung über ein TDM Netz angepasst und anschließend über eine mit der Zeitmultipextechnik betriebene Verbindungsstrecke TDM zu der Leitungsverbindungsgruppe CC-LTG übertragen. Entsprechend dem Ausführungsbeispiel werden Mittel zur Anpassung von auf den ISDN-Anschlusstyp bezogenen Teilen der Signalisierungsinformationen ISDN-sig in der Master-Paketkontrolleinheit PCU vorgesehen. Es ist sinnvoll, diese Mittel auch in der Ersatzpaketkontrolleinheit vorzusehen, um die Funktionalität bei Störfällen zu gewährleisten.

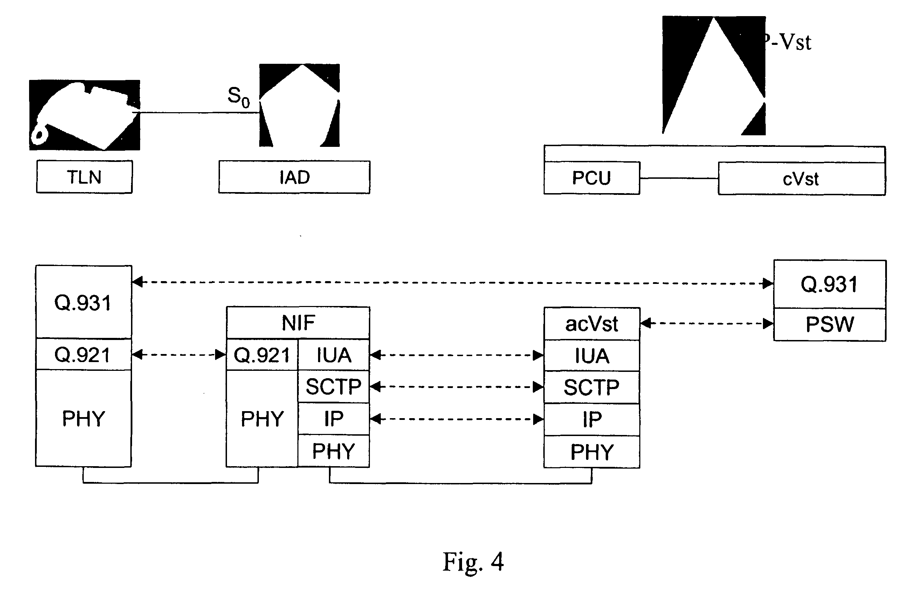

Fig. 4 illustriert auf Protokollebene den Austausch von Signalisierungsinformationen zwischen einen Endgerät TLN einer Netzzugangseinrichtung IAD und einer paketorientierten Vermittlungsstelle P-Vst, die eine Paketanpassungseinheit PCU und einen zentralen Teil cVst umfasst. Der Anschluss des Endgeräts erfolgt als BRA über eine S₀ Schnittstelle. Es wird das DSS1 Protokoll verwendet. Bei diesem Protokoll können entsprechend dem OSI (Open Systems Interconnection) Modell Bitübertragungsschicht (Schicht 1), Sicherungsschicht (Schicht 2) und Vermittlungsschicht (Schicht 3) unterschieden werden. Die Sicherungsschicht ist in den Standards ITU-T Q.920 (ISDN user-network interface data link layer - General aspects) und ITU-T Q.921 (SDN user-network interface - Data link layer specification) beschrieben. Signalisierungsnachrichten der Schicht 3, die in den Standards ITU-T Q.930 (ISDN user-network interface layer 3 - General aspects) und ITU-T Q.931 (SDN user-network interface layer 3 specification for basic call control) beschrieben sind, werden dann nach eventueller Anpassung im peripheren Adapter paketnetzseitig mit Hilfe des SCTP (stream control transmission protocol) Protokolls und geeigneter DSS1-Anpassungen (IUA) weiterübertragen. In der Figur sind verschiedene verwendete Protokolle bzw. Protokollstapel gezeigt: Auf der Vermittlungsschicht kommunizieren Endgerät TLN und zentraler Teil cVst der paketorientierten Vermittlungsstelle P-Vst mit Hilfe von im Standard Q.931 festgelegten Spezifikationen. Die Spezifikationen für den Austausch von D-Kanal Signalisierungsinformationen zwischen Endgerät TLN und peripheren Adapter IAD auf der Sicherungsschicht (data link layer) sind in der Q.921 definiert. Die Bitübertragungsschicht (physical layer) ist durch das Bezugszeichen PHY gekennzeichnet. Zwischen dem peripheren Adapter IAD und der Paketanpassungseinheit PCU werden die Signalisierungsnachrichten paketbasiert übertragen. Der dafür verwendete Protokollstapel umfasst eine IP (Internet Protokol) Ebene über der das SCTP-Protokolls und eine ISDN-spezifischer Adaptionsschicht IUA liegt. Der periphere Adapter weist zudem Funktionen NIF (nodal interwork function) zur Anpassung für die TDM-seitigen und paketnetzseitigen Protokollstapel auf. Die Paketanpassungseinheit PCU weist Funktionen acVst zur Anpassung von Informationen und Nachrichten für die Bearbeitung durch den zentralen Teil cVst der paketorientierten Vermittlungsstelle P-Vst auf. Mittels dieser Funktionen acVst können Daten zur Prozessorsoftware PSW im zentralen Teil cVst übertragen werden.

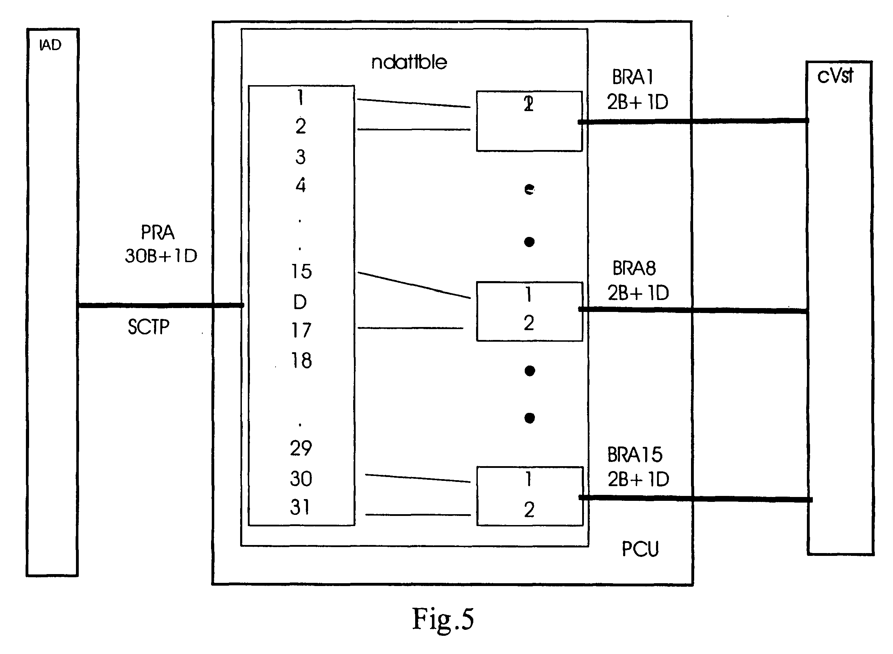

In Figur 5 ist gezeigt, wie eine Anpassung der Nutzdatenbezüge zum Zwecke der Repräsentation eines PRA-Anschlusses durch BRA-Anschlüsse in dem zentralen Teil cVst der paketorientierten Vermittlungsstelle P-Vst vorgenommen werden kann. Der PRA-Anschluss hat dreißig Basiskanäle bzw. Nutzdatenkanäle und einen Signalisierungskanal bzw. D-Kanal. Dieser Sachverhalt ist in der Figur 5 wiedergegeben durch das Bezugszeichen 30B+1D. Dieser PRA-Anschluss wird in dem zentralen Teil cVst der paketorientierten Vermittlungsstelle P-Vst durch fünfzehn BRA-Anschlüsse BRA1...BRA15 mit jeweils zwei Nutzdatenkanälen und einem Signalisierungskanal bzw. D-Kanal repräsentiert (Bezugszeichen für BRA-Konfiguration: 2B+1D). In der Paketkontrolleinheit PCU wird mit Hilfe einer Umsetztabelle ndattble eine Zuordnung bzw. Abbildung der fünfzehn logischen BRA-Anschlüsse BRA1 ... BRA15 auf den physikalischen PRA-Anschluss durchgeführt. Dabei werden die beiden Basiskanäle des ersten BRA-Anschlusses BRA1 auf die Nutzdatenkanäle 1 und 2 des PRA-Anschlusses abgebildet. Die beiden Basiskanäle des zweiten BRA-Anschlusses BRA2 werden dann auf die Nutzdatenkanäle 3 und 4 des BRA-Anschlusses abgebildet. So werden jeweils zwei Basiskanäle der BRA-Anschlüsse auf zwei Nutzdatenkanäle des BRA-Anschlusses übergeführt. Bei der Nummerierung entsprechend der Umsetztabelle ndattble ist zu beachten, dass der Kanal mit der Nummer 16 des BRA-Anschlusses für die Signalisierung reserviert ist und folglich nicht bei der Änderung der Nutzdatenbezüge berücksichtigt werden muss. Die gezeigte Tabelle gibt eine Vorschrift für die Änderung von Nutzdatenbezüge, wie z.B. die Nutzdatenkanalnummer, in den Signalisierungsnachrichten. Die Referenzierung der Nutzdatenkanäle wird angepasst. Nutzdaten selber brauchen keiner Anpassung zu unterliegen. Der Austausch von Signalisierungsinformationen, z.B. die Übermittlung einer Verbindungsaufbaunachricht, zwischen peripherem Adapter IAD und der Paketanpassungseinheit PCU wird mit Hilfe des SCTP-Protokolls vorgenommen. Bei einer vermittlungsstellenseitigen Konzentration der Nutzdatenkanäle würden weniger als fünfzehn BRA-Anschlüsse auf den PRA-Anschluss abgebildet werden. Dies ist insofern flexibel und einfach realisierbar, als die BRA-Anschlüsse logische aber keine physikalischen Anschlüsse sind. Sinnvoll ist eine Konzentration zum Beispiel, wenn der Datendurchsatz des PRA-Anschlusses deutlich geringer als die maximale Kapazität ist und somit sogar in Lastsituationen nur ein geringer Teil der Nutzdatenkanäle des PRA gleichzeitig belegt ist.

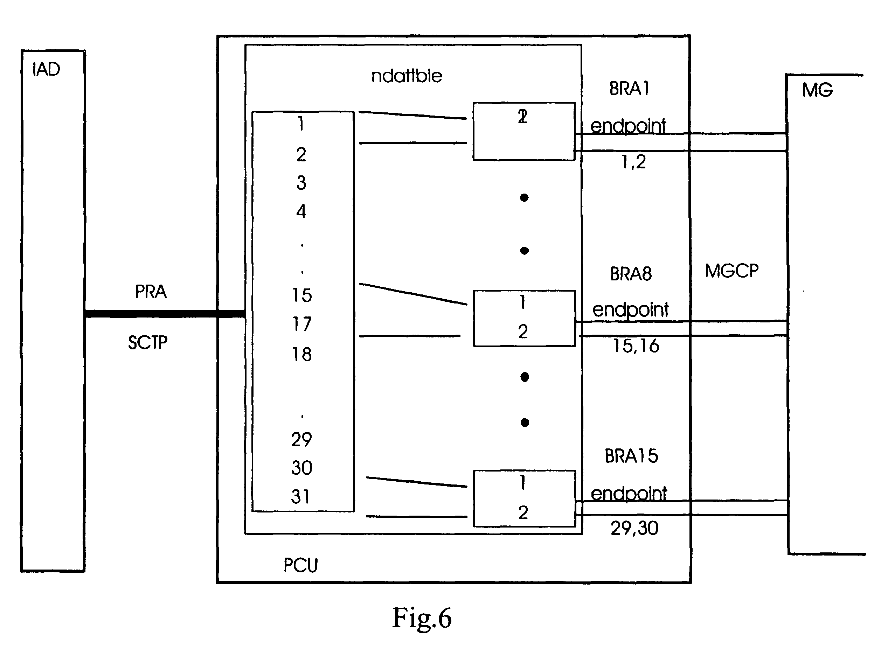

Figur 6 zeigt eine entsprechende Umsetzung von Signalisierungsinformationen zur Nutzdatensteuerung, z.B. des Nutzdatenroutings, im Paketnetz. Eine solche Umsetzung ist erforderlich zur Steuerung des Nutzdatenkanals zwischen peripherem Adapter IAD und fernen Teilnehmern gemäß Figur 2 und zur Steuerung des Nutzdatenkanals zwischen peripherem Adapter IAD und vorgelagertem Media Gateway gemäß Figur 3., wo von der Paketanpassungseinheit PCU Signalisierungsinformationen zur Nutzdatensteuerung an den peripheren Adapter IAD und das Media Gateway MG übertragen werden.

Das dazu verwendete Protokoll ist dabei beispielsweise das MGCP-Protokoll, in dem jeder B-Kanal als eigener Endpunkt definiert wird.

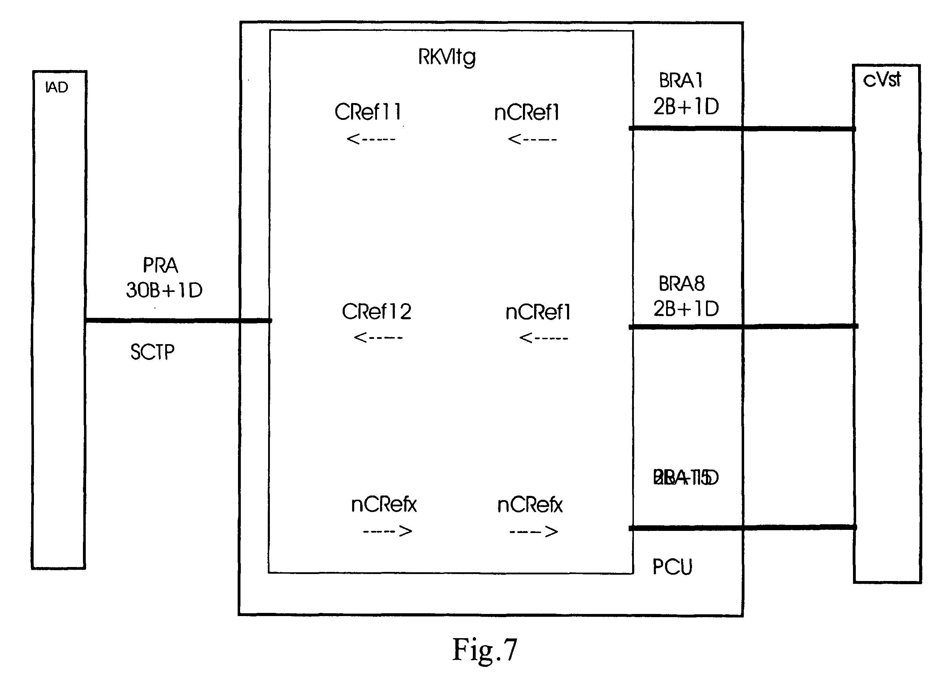

In Figur 7 ist die erfindungsgemäße Behandlung der Rufkennungen (Call References) für das Szenario entsprechend der Figuren 1 bis 3 dargestellt. Rufkennungen werden temporär und verbindungsbezogen pro Anschluss bzw. D-Kanal vergeben. Daher können gleiche Rufkennungen zu verschiedenen D-Kanälen der BRA-Anschlüsse in dem zentralen Teil cVst der paketorientierten Vermittlungsstelle P-Vst, in dem die Steuerfunktionen für Sprachverbindungen wahrgenommen werden, verwendet werden. Eine derartige Situation kann zum Beispiel vorkommen, wenn ein A-Teilnehmer einen an die Nebenstelle ISDN-PBX1 von Fig.1 angeschlossenen B-Teilnehmer ruft. Rufkennungen von den BRA-Anschlüssen, die zu der Paketanpassungseinrichtung PCU übertragen werden, werden von einer Rufkennungsverwaltung RKVltg für die ISDN-nebenstellenseitige Weiterverwendung angepasst. Gleiche Rufkennungen, zum Beispiel nCRef1 für die Anschlüsse BRA1 und BRA2 werden dabei auf unterschiedliche Rufkennungen CRef11 und CRef12 abgebildet, um Eindeutigkeit innerhalb des D-Kanals des PRA-Anschlusses herzustellen. Auf Seite der ISDN-Nebenstelle ISDN-PBX1 neu vergebene Rufkennungen, wie zum Beispiel nCRefx, brauchen in der Paketanpassungseinrichtung PCU nicht angepasst werden. Über den D-Kanal des PRA-Anschlusses Richtung paketorientierte Vermittlungsstelle P-Vst übertragene Rufreferenzen sind innerhalb des D-Kanals eindeutig und behalten diese Eindeutigkeit natürlich auch nach Aufteilung auf die D-Kanäle der verschiedenen logischen BRA-Anschlüsse. Die Übertragung der Rufkennungen bzw. von Signalisierungsnachrichten, die Rufkennungen enthalten, zwischen den peripheren Adaptern IAD und der paketorientierten Vermittlungsstelle P-Vst wird vorzugsweise mit Hilfe des SCTP-Protokolls und ISDN-spezifischer Adaptionsschicht (z. B. IUA) realisiert.

## Patentansprüche

1. Verfahren zum Austausch von Signalisierungsinformationen zwischen einem ISDN-Anschluss (PRA) und dem zentralen Teil (cVst) einer paketorientierten Vermittlungsstelle (P-Vst) über eine periphere Einheit (PE) der paketorientierten Vermittlungsstelle (P-Vst), bei dem
- die Bearbeitung und Behandlung der von dem ISDN-Anschluss (PRA) übertragenen Signalisierungsinformationen durch den zentralen Teil (cVst) der paketorientierte Vermittlungsstelle (P-Vst) unabhängig vom Typ des ISDN-Anschlusses (PRA) erfolgt,
- von dem ISDN-Anschluss (PRA) zu der peripheren Einheit (PE) übertragene Signalisierungsinformationen in der peripheren Einheit (PE) für die vom ISDN-Anschlusstyp unabhängige Behandlung durch den zentralen Teil (cVst) der paketorientierten Vermittlungsstelle (P-Vst) angepasst werden, und
- von dem zentralen Teil (cVst) der paketorientierten Vermittlungsstelle (P-Vst) zu der peripheren Einheit (PE) übertragene Signalisierungsinformationen in der peripheren Einheit (PE) nach Maßgabe des ISDN-Anschlusstyps angepasst werden.

2. Verfahren nach Anspruch 1,
**dadurch gekennzeichnet,**
- **dass** in dem zentralen Teil (cVst) der paketorientierten Vermittlungsstelle (P-Vst) verschiedene ISDN-Anschlüsse (PRA, BRA) durch einen einzigen Anschlusstyp repräsentiert werden,
- **dass** der Anschlusstyp des ISDN-Anschlusses (PRA) sich von dem ISDN-Anschlusstyp (BRA) unterscheidet, durch den ISDN-Anschlüsse in dem zentralen Teil (cVst) der paketorientierten Vermittlungsstelle repräsentiert werden, und
- **dass** Signalisierungsinformationen zwischen dem ISDN-Anschluss (PRA) und dem zentralen Teil (cVst) der paketorientierten Vermittlungsstelle (P-Vst) ausgetauscht werden, für die in der peripheren Einheit (PE) eine Anpassung nach Maßgabe der unterschiedlichen ISDN-Anschlusstypen vorgenommen wird.

3. Verfahren nach Anspruch 2,
**dadurch gekennzeichnet,**
- **dass** die Anpassung der Signalisierungsinformationen im Sinne einer Abbildung von für den jeweiligen ISDN-Anschlusstyp unterschiedenen Nutzdatenkanälen aufeinander vorgenommen wird.

4. Verfahren nach Anspruch 3,
**dadurch gekennzeichnet,**
- **dass** die Abbildung mit Hilfe wenigstens einer Tabelle (ndattble) in der peripheren Einheit (PE) vorgenommen wird.

5. Verfahren nach Anspruch 4,
**dadurch gekennzeichnet,**
- **dass** die Tabelle (ndattble) von der Netzwerkverwaltung eingerichtet und administriert wird.

6. Verfahren nach einem der vorhergehenden Ansprüche 3 bis 5,
**dadurch gekennzeichnet,**
- **dass** in dem zentralen Teil (cVst) der paketorientierten Vermittlungsstelle (P-Vst) verschiedene ISDN-Anschlusstypen durch einen BRA-Anschluss oder eine Mehrzahl von BRA-Anschlüssen repräsentiert werden, und
- **dass** der Typ des ISDN-Anschlusses (PRA) durch einen PRA Anschluss gegeben ist.

7. Verfahren nach einem der Ansprüche 4 bis 6,
**dadurch gekennzeichnet,**
**dass** im Rahmen der Abbildung eine Konzentration von Nutzdatenkanälen vorgenommen wird.

8. Verfahren nach einem der Ansprüche 4 bis 7,
**dadurch gekennzeichnet,**
**dass** Rufkennungen und Nutzkanalbezüge im Sinne der Abbildung von für den jeweiligen ISDN-Anschlusstyp unterschiedenen Nutzdatenkanälen aufeinander angepasst werden.

9. Verfahren nach einem der vorhergehenden Ansprüche,
**dadurch gekennzeichnet,**
**dass** die zwischen dem ISDN-Anschluss (PRA) und der peripheren Einheit (PE) der paketorientierten Vermittlungsstelle (P-Vst) ausgetauschten Signalisierungsinformationen über einen peripheren Adapter (IAD) ausgetauscht werden.

10. Verfahren nach Anspruch 9,
**dadurch gekennzeichnet,**
- **dass** zur Signalisierung der Steuerung des Nutzdatenkanals ein Media Gateway Control Protocol (MGCP) oder das H.248 Protokoll zwischen peripherem Adapter (IAD) und der paketbasierten Vermittlungsstelle (P-Vst) verwendet wird.

11. Periphere Einheit (PE) für Anpassungsfunktionen einer paketorientierten Vermittlungsstelle (P-Vst),
- mit Mitteln zum Anpassen von von einem ISDN-Anschluss (PRA) an den zentralen Teil (cVst) der paketorientierten Vermittlungsstelle (P-Vst) übertragenen Signalisierungsinformationen im Sinne einer ISDN-Anschlusstyp unabhängigen Bearbeitung und Behandlung der Signalisierungsinformationen durch den zentralen Teil (cVst)der paketbasierte Vermittlungsstelle (P-Vst).

12. Periphere Einheit (PE) nach Anspruch 11,
**dadurch gekennzeichnet,**
- **dass** die Mittel Mittel zum Anpassen von Signalisierungsinformationen, die mit verschiedenen ISDN-Anschlusstypen korrespondieren, und Mittel für eine Anpassung der Signalisierungsinformationen im Sinne einer Abbildung von für den jeweiligen ISDN-Anschlusstyp unterschiedenen Nutzdatenkanälen aufeinander umfassen.

13. Periphere Einheit (PE) nach einem der Ansprüche 11 oder 12,
**dadurch gekennzeichnet,**
- **dass** die Mittel eine Tabelle (ndattble) zum Anpassen von Signalisierungsinformationen im Sinne einer Abbildung von für den jeweiligen ISDN-Anschlusstyp unterschiedenen Nutzdatenkanälen aufeinander umfassen.

14. Periphere Einheit (PE) nach einem der Ansprüche 11 bis 13,
**dadurch gekennzeichnet,**
**dass** die unterschiedlichen ISDN-Anschlusstypen durch einen paketnetzseitigen BRA-Anschluss und einen ISDN-Anschlussseitigen PRA-Anschluss gegeben sind.

15. Periphere Einheit (PE) nach einem der Ansprüche 11 bis 14,
**dadurch gekennzeichnet,**
- **dass** die Mittel zum Anpassen von Signalisierungsinformationen Mittel zum Anpassen von Rufkennungen und Nutzkanalbezügen umfassen.

16. Periphere Einheit (PE) nach einem der Ansprüche 11 bis 15,
**dadurch gekennzeichnet,**
- **dass** die periphere Einheit (PE) als Paketanpassungseinheit (PCU) ausgebildet ist.

17. Paketorientierte Vermittlungsstelle mit mindestens einer peripheren Einheit nach einem der Ansprüche 11 bis 16.

18. Paketorientierte Vermittlungsstelle nach Anspruch 17,
**dadurch gekennzeichnet,**
- **dass** die periphere Einheit (PE) gedoppelt ist, und
- **dass** den Mittel zum Anpassen von Signalisierungsinformationen entsprechende Mittel in der gedoppelten periphere Einheit angeordnet sind.

## Claims

1. Method for exchanging signalling information between an ISDN access (PRA) and the central core (cVst) of a packet-oriented exchange (P-Vst) via a peripheral unit (PE) of the packet-oriented exchange (P-Vst), wherein
- the signalling information transmitted by the ISDN access (PRA) is processed and handled by the central core (cVst) of the packet-oriented exchange (P-Vst) irrespective of the type of ISDN access (PRA),
- signalling information transmitted by the ISDN access (PRA) to the peripheral unit (PE) is adapted in the peripheral unit (PE) for ISDN access type-independent handling by the central core (cVst) of the packet-oriented exchange (P-Vst), and
- signalling information transmitted by the central core (cVst) of the packet-oriented exchange (P-Vst) to the peripheral unit (PE) is adapted in the peripheral unit (PE) in accordance with the ISDN access type.

2. Method according to claim 1,
**characterised in that**
- different ISDN accesses (PRA, BRA) are represented by a single access type in the central core (cVst) of the packet-oriented exchange (P-Vst),
- the access type of the ISDN access (PRA) differs from the ISDN access type (BRA) by means of which ISDN accesses are represented in the central core (cVst) of the packet-oriented exchange, and
- signalling information is exchanged between the ISDN access (PRA) and the central core (cVst) of the packet-oriented exchange (P-Vst), for which signalling information an adaptation is performed in the peripheral unit (PE) in accordance with the different ISDN access types.

3. Method according to claim 2,
**characterised in that**
- the signalling information is adapted for the purpose of mapping to one another user data channels differentiated according to the respective ISDN access type.

4. Method according to claim 3,
**characterised in that**
- the mapping is performed in the peripheral unit (PE) with the aid of at least one table (ndattble).

5. Method according to claim 4,
**characterised in that**
- the table (ndattble) is set up and administered by the network management.

6. Method according to one of the preceding claims 3 to 5,
**characterised in that**
- different ISDN access types are represented in the central core (cVst) of the packet-oriented exchange (P-Vst) by a BRA access or a plurality of BRA accesses, and
- the type of the ISDN access (PRA) is given by a PRA access.

7. Method according to one of claims 4 to 6,
**characterised in that**
a concentration of user data channels is performed in the context of the mapping.

8. Method according to one of claims 4 to 7,
**characterised in that**
call references and user channel references are adapted to one another for the purpose of mapping different user data channels differentiated according to the respective ISDN access type.

9. Method according to one of the preceding claims,
**characterised in that**
the signalling information exchanged between the ISDN access (PRA) and the peripheral unit (PE) of the packet-oriented exchange (P-Vst) is exchanged by way of a peripheral adapter (IAD).

10. Method according to claim 9,
**characterised in that**
- a Media Gateway Control Protocol (MGCP) or the H.248 protocol is used between the peripheral adapter (IAD) and the packet-based exchange (P-Vst) for signalling the control of the user data channel.

11. Peripheral unit (PE) for adaptation functions of a packet-oriented exchange (P-Vst),
- having means for adapting signalling information transmitted by an ISDN access (PRA) to the central core (cVst) of the packet-oriented exchange (P-Vst) for the purpose of ISDN access type-independent processing and handling of the signalling information by the central core (cVst) of the packet-based exchange (P-Vst).

12. Peripheral unit (PE) according to claim 11,
**characterised in that**
- the means comprise means for adapting signalling information corresponding to different ISDN access types, and means for adapting the signalling information for the purpose of mapping to one another user data channels differentiated according to the respective ISDN access type.

13. Peripheral unit (PE) according to one of claims 11 or 12,
**characterised in that**
- the means comprise a table (ndattble) for adapting signalling information for the purpose of mapping to one another user data channels differentiated according to the respective ISDN access type.

14. Peripheral unit (PE) according to one of claims 11 to 13,
**characterised in that**
the different ISDN access types are given by a BRA access on the packet network side and a PRA access on the ISDN access side.

15. Peripheral unit (PE) according to one of claims 11 to 14,
**characterised in that**
- the means for adapting signalling information comprise means for adapting call references and user channel references.

16. Peripheral unit (PE) according to one of claims 11 to 15,
**characterised in that**
- the peripheral unit (PE) is embodied as a packet adaptation unit (PCU) .

17. Packet-oriented exchange having at least one peripheral unit according to one of claims 11 to 16.

18. Packet-oriented exchange according to claim 17,
**characterised in that**
- the peripheral unit (PE) is duplicated, and
- means corresponding to the means for adapting signalling information are disposed in the duplicated peripheral unit.

## Revendications

1. Procédé pour l'échange d'informations de signalisation entre un accès ISDN (PRA) et la partie centrale (cVst) d'un commutateur (P-Vst) orienté paquets par l'intermédiaire d'une unité périphérique (PE) du commutateur (P-Vst) orienté paquets, dans lequel
- le traitement et la manipulation des informations de signalisation transmises par l'accès ISDN (PRA) sont réalisés par la partie centrale (cVst) du commutateur (P-Vst) orienté paquets, indépendamment du type de l'accès ISDN (PRA),
- les informations de signalisation transmises par l'accès ISDN (PRA) à l'unité périphérique (PE) sont adaptées dans l'unité périphérique (PE) pour le traitement, indépendant du type d'accès ISDN, par la partie centrale (cVst) du commutateur (P-Vst) orienté paquets, et
- les informations de signalisation transmises par la partie centrale (cVst) du commutateur (P-Vst) orienté paquets à l'unité périphérique (PE) sont adaptées dans l'unité périphérique (PE) selon le type d'accès ISDN.

2. Procédé selon la revendication 1,
**caractérisé**
- **en ce que**, dans la partie centrale (cVst) du commutateur (P-Vst) orienté paquets, différents accès ISDN (PRA, BRA) sont représentés par un seul type d'accès,
- **en ce que** le type d' accès de l'accès ISDN (PRA) se distingue du type d'accès ISDN (BRA), par lequel des accès ISDN sont représentés dans la partie centrale (cVst) du commutateur orienté paquets, et
- **en ce que** les informations de signalisation sont échangées entre l'accès ISDN (PRA) et la partie centrale (cVst) du commutateur (P-Vst) orienté paquets, pour lesquelles une adaptation est exécutée dans l'unité périphérique (PE) selon les différents types d'accès ISDN.

3. Procédé selon la revendication 2,
**caractérisé**
- **en ce que** l'adaptation des informations de signalisation est exécutée au sens d'une représentation de différents canaux de données utiles les uns sur les autres pour le type d'accès ISDN respectif.

4. Procédé selon la revendication 3,
**caractérisé**
- **en ce que** la représentation est exécutée dans l'unité périphérique (PE) à l'aide d'au moins une table (ndattble).

5. Procédé selon la revendication 4,
**caractérisé**
- **en ce que** la table (ndattble) est configurée et administrée par la gestion de réseau.

6. Procédé selon l'une quelconque des revendications 3 à 5,
**caractérisé**
- **en ce que**, dans la partie centrale (cVst) du commutateur (P-Vst) orienté paquets, différents types d'accès ISDN sont représentés par un accès BRA ou une pluralité d'accès BRA, et
- **en ce que** le type de l'accès ISDN (PRA) est donné par un accès PRA.

7. Procédé selon l'une quelconque des revendications 4 à 6,
**caractérisé**
**en ce qu'**une concentration de canaux de données utiles est exécutée dans le cadre de la représentation.

8. Procédé selon l'une quelconque des revendications 4 à 7,
**caractérisé**
**en ce que** des identifications d'appels et des références de canaux utiles sont adaptées les unes aux autres au sens de la représentation de différents type de canaux de données utiles pour le type d'accès ISDN respectif.

9. Procédé selon l'une quelconque des revendications précédentes, **caractérisé**
**en ce que** les informations de signalisation échangées entre l'accès ISDN (PRA) et l'unité périphérique (PE) du commutateur (P-Vst) orienté paquets sont échangées par l'intermédiaire d'un adaptateur périphérique (IAD).

10. Procédé selon la revendication 9,
**caractérisé**
- **en ce qu'**un Media Gateway Control Protocol (MGCP) ou le protocole H.248 est utilisé entre l'adaptateur périphérique (IAD) et le commutateur (P-Vst) orienté paquets pour la signalisation de la commande du canal de données utiles.

11. Unité périphérique (PE) pour des fonctions d'adaptation d'un commutateur (P-Vst) orienté paquets,
- comprenant des moyens pour adapter des informations de signalisation, transmises par un accès ISDN (PRA) à la partie centrale (cVst) du commutateur (P-Vst) orienté paquets, au sens d'un traitement et d'une manipulation des informations de signalisation, indépendants du type d'accès ISDN, par la partie centrale (cVst) du commutateur (P-Vst) orienté paquets.

12. Unité périphérique (PE) selon la revendication 11,
**caractérisée**
- **en ce que** les moyens comprennent des moyens pour adapter des informations de signalisation, qui correspondent aux différents types d'accès ISDN, et des moyens pour adapter des informations de signalisation au sens d'une représentation de différents canaux de données utiles les uns sur les autres pour le type d'accès ISDN respectif.

13. Unité périphérique (PE) selon la revendication 11 ou 12,
**caractérisée**
- **en ce que** les moyens comprennent une table (ndattble) pour adapter des informations de signalisation au sens d'une représentation de canaux de données utiles les uns sur les autres pour le type d'accès ISDN respectif.

14. Unité périphérique (PE) selon l'une quelconque des revendications 11 à 13,
**caractérisée**
**en ce que** les différents types d'accès ISDN sont donnés par un accès BRA côté réseau à commutation par paquets et par un accès PRA côté accès ISDN.

15. Unité périphérique (PE) selon l'une quelconque des revendications 11 à 14,
**caractérisée**
- **en ce que** les moyens pour adapter des informations de signalisation comprennent des moyens pour adapter des identifications d'appels et des références de canaux utiles.

16. Unité périphérique (PE) selon l'une quelconque des revendications 11 à 15,
**caractérisée**
- **en ce que** l'unité périphérique (PE) est exécutée comme unité d'adaptation de paquets (PCU).

17. Commutateur orienté paquets comprenant au moins une unité périphérique selon l'une quelconque des revendications 11 à 16.

18. Commutateur orienté paquets selon la revendication 17,
**caractérisé**
- **en ce que** l'unité périphérique (PE) est doublée et
- **en ce que** des moyens correspondants dans l'unité périphérique doublée sont attribués aux moyens d'adaptation d'informations de signalisation.
